## Europäisches Patentamt

## European Patent Office

## Office européen des brevets

(19)

(11) Veröffentlichungsnummer: **0 092 088**
**B1**

(12)

# EUROPÄISCHE PATENTSCHRIFT

(45) Veröffentlichungstag der Patentschrift:
28.10.87

(51) Int. Cl.⁴: **H 01 S 3/097**

(21) Anmeldenummer: 83103252.9

(22) Anmeldetag: 31.03.83

(54) Anordnung zur Anpassung von pulsformenden Netzwerken an die Erfordernisse des Anregungskreises eines TE-Hochenergielasersystems.

(30) Priorität: 16.04.82 DE 3214062
27.08.82 DE 3232024

(43) Veröffentlichungstag der Anmeldung:
26.10.83 Patentblatt 83/43

(45) Bekanntmachung des Hinweises auf die Patenterteilung:
28.10.87 Patentblatt 87/44

(84) Benannte Vertragsstaaten:
AT CH FR GB IT LI

(56) Entgegenhaltungen:
EP - A - 0 024 576
DE - A - 2 932 781
FR - A - 2 398 398
FR - A - 2 509 905
US - A - 4 077 020

INSTRUMENTS AND EXPERIMENTAL TECHNIQUES,
Band 24, Nr. 2, Heft 2 März/April 1981, Seiten 486-487
NEW YORK, (US) V.S. ARAKELYAN et al.: "Compact high peak power nitrogen laser".
REVIEW OF SCIENTIFIC INSTRUMENTS, Band 47, No. 1, Januar 1976, Seiten 92-95, NEW YORK, (US) C.P. WANG: "Simple fast-discharge device for high-power pulsed lasers".

(73) Patentinhaber: Siemens Aktiengesellschaft Berlin und München, Wittelsbacherplatz 2, D-8000 München 2 (DE)

(72) Erfinder: Cirkel, Hans-Jürgen, Dr., Anderlohrstrasse 9, D-8520 Erlangen (DE)
Erfinder: Bette, Willi, Penzoldtstrasse 5, D-8520 Erlangen (DE)

**Beschreibung**

Die Erfindung bezieht sich auf eine Anordnung zur Anpassung von pulsformenden Netzwerken (PFN) an die Erfordernisse des Anregungskreises eines TE-Hochenergielasersystems gemäss Oberbegriff der Ansprüche 1 und 7.

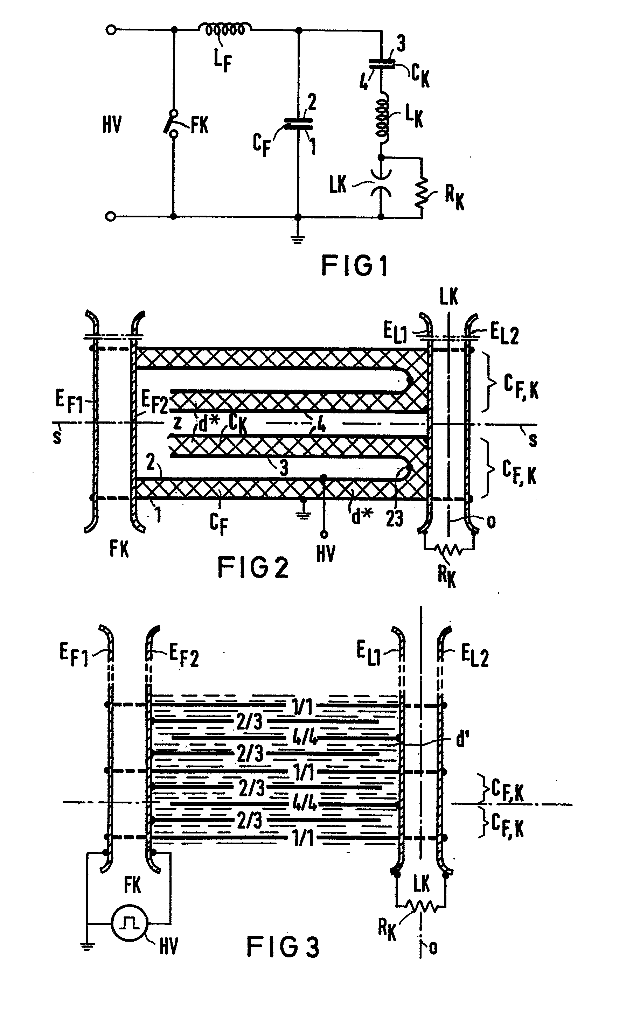

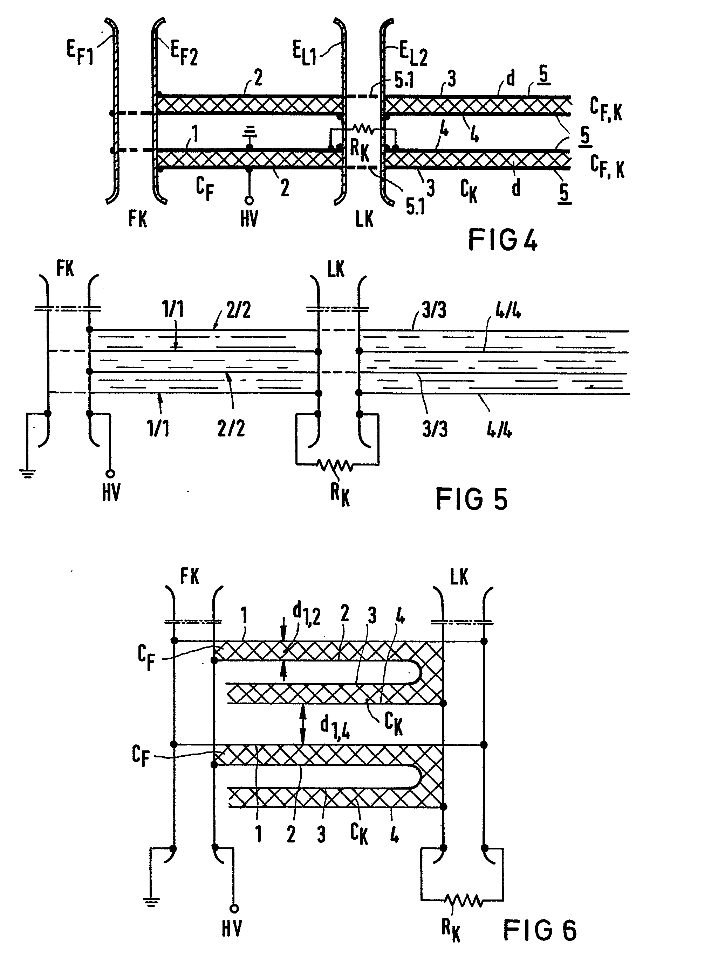

Eine solche Anordnung ist durch die DE-A-2 932 781, bzw. EP-A-0 024 576 bis auf das Merkmal bekannt, dass dort in den Schaltbildern der Fig. 1 für die Blümlein-Schaltung und der Fig. 4 für die Charge-Transfer-Schaltung die Ersatzinduktivitäten des Anregungskreises $L_F$, $L_K$ bzw. $L_F'$, $L_K'$ nicht eingezeichnet sind. Für die vorliegende Anmeldung ist aber die Berücksichtigung dieser Ersatzinduktivitäten von wesentlicher Bedeutung.

Zur näheren Erläuterung des Begriffs TE-Laser (TE = transversely excited) – siehe die vorgenannte deutsche Offenlegungsschrift. Da diese TE-Laser mit Drucken in der Laserkammer bis zu mehreren bar arbeiten, werden sie in neuerer Zeit bevorzugt als TE-Laser, und nicht mehr als TEA-Laser bezeichnet.

Hier wie im folgenden wird vorausgesetzt, dass Hochenergielasersysteme gemäss Gattungsbegriff mit Vorionisierungs-Einrichtungen ausgerüstet sind, wie sie z.B. in der DE-A-3 035 702 (Gleitfunkenentladung) oder der DE-A-3 035 730 (Vorionisierungsstäbe) beschrieben sind; deswegen erübrigt sich eine Darstellung im Rahmen der vorliegenden Anmeldung. Die vorliegende Erfindung befasst sich mit dem Problem der günstigen Ausgestaltung des pulsformenden Netzwerkes und Bemessung seiner Schaltelemente im Rahmen des Anregungskreises, wobei unter Anregungskreis sowohl das pulsformende Netzwerk mit seinem schnellen Hochenergieschalter als auch der Laserkopf verstanden wird.

Ein besonderes Problem, das sich bei der Anordnung gemäss Gattungsbegriff stellt, ist, die Belastung des schnellen Hochspannungsschalters in erträglichen Grenzen zu halten, damit nicht zu kurze Standzeiten in Kauf genommen werden müssen, dabei darf jedoch die Anstiegszeit der Hochspannungsimpulse für den Laserkopf einen Maximalwert nicht überschreiten. Es kommt dabei darauf an, aus der auf dem pulsformenden Netzwerk gespeicherten Energie an den Laser-Elektroden eine möglichst lichtbogenfreie Entladung zu erzeugen, um den höchst möglichen Anteil in optische Energie umwandeln zu können.

Der Erfindung liegt die Aufgabe zugrunde, eine Anordnung zur Anpassung von pulsformenden Netzwerken an die Erfordernisse des Anregungskreises eines TE-Hochenergielasersystems zu schaffen, mit welcher sich die aufgezeigten Probleme auf besonders günstige Weise lösen lassen, d.h. mit welcher eine unerwünschte Überlastung des schnellen Hochspannungsschalters vermeidbar ist, welcher eine ausreichend kurze Anstiegszeit für die den Laser-Elektroden zuzuführende Hochspannung aufweist und mit welcher sich ein sehr günstiges Verhältnis der an den Laser-Elektroden ausnutzbaren Hochspannungsenergie einerseits zu der in das pulsformende Netzwerk hineingesteckten Energie andererseits erzielen lässt.

Erfindungsgemäss wird die gestellte Aufgabe durch die im Kennzeichen des Anspruchs 1 angegebenen Merkmale gelöst. Vorteilhafte Weiterbildungen für die dem Gegenstand des Anspruchs 1 zugrundegelegte Blümlein-Schaltung des pulsformenden Netzwerkes sind in den Unteransprüchen 2 bis 6 angegeben. Dabei umschreibt Anspruch 2 eine bevorzugte Ausführungsform einer kompakten Bandleiterkondensator-Anordnung, auf die sich die Erfindung insbesondere bezieht.

Die gestellte Aufgabe wird auch gelöst durch die im Kennzeichen des Anspruchs 7 angegebenen Merkmale, welche sich auf ein pulsformendes Netzwerk in Charge-Transfer-Schaltung beziehen.

Weitere Ausgestaltungen sowohl für den Gegenstand des Anspruchs 7 als auch des Anspruchs 2, betreffen die Unteransprüche 8 bis 11 sowie 14.

Der Anspruch 12 dagegen bildet nur den Gegenstand des Anspruches 2 oder der Ansprüche 8 bis 11 – soweit sie sich auf Anspruch 2 rückbeziehen – weiter, d.h. seinem Gegenstand ist eine Blümlein-Schaltung nach Anspruch 1 zugrundegelegt.

Entsprechendes gilt für den Anspruch 13, dessen Gegenstand eine Charge-Transfer-Schaltung zugrundegelegt ist, so dass er sich nur auf Anspruch 7 oder auf einen der Ansprüche 8 bis 11 – soweit sie sich auf den Anspruch 7 rückbeziehen – bezieht.

Im folgenden wird anhand der Zeichnung, in der mehrere Ausführungsbeispiele der Erfindung dargestellt sind, diese noch näher erläutert. Darin zeigt in schematischer, vereinfachter Darstellung:

Fig. 1 einen Anregungskreis in Blümlein-Schaltung;

Fig. 2 eine räumliche Anordnung des Anregungskreises im Ausschnitt mit laserachsparallel gestapelten Bandleiterkondensatoren und daran angeschlossenen rohrförmigen Systemen eines Hochspannungsschalters und einer Laserkammer;

Fig. 3 in entsprechender Darstellung zu Fig. 2 eine Laser-Anordnung, bei der flüssiges Dielektrikum, insbesondere Wasser für die Bandleiterkondensatoren verwendet ist;

Fig. 4 ein drittes Beispiel für eine Anordnung in Blümlein-Schaltung, bei der im Vergleich zu Fig. 2 alle Kondensatorbeläge ungefaltet planparallel zueinander angeordnet sind und die Laserkammer diese in einem Durchbruch durchdringt;

Fig. 5 die Anordnung nach Fig. 4, wobei jedoch anstelle eines festen Isolierstoffes flüssiges Dielektrikum, insbesondere Wasser, verwendet ist;

Fig. 6 ein fünftes Beispiel für eine Anordnung in Blümlein-Schaltung, bei der im Gegensatz zum Ausführungsbeispiel nach Fig. 2 die in Stapelrichtung einander benachbarten Kapazitätseinheiten nicht spiegelbildlich zueinander, sondern gleichsinnig, d.h. mit gleichartiger Orientierung ihrer Beläge, aufeinanderfolgen;

Fig. 7 eine Variante zu Fig. 6, bei der anstelle des festen ein flüssiges Dielektrikum, insbesondere Wasser, für den gestapelten Bandleiterkondensator verwendet ist;

Fig. 8 einen Anregungskreis für das TE-Hochenergielasersystem mit einer Charge-Transfer-Schaltung;

Fig. 9 eine räumliche Anordnung für den Anregungskreis nach Fig. 8 in einer Darstellung sinngemäss zu derjenigen der Fig. 2;

Fig. 10 eine Variante zu Fig. 9, bei der wieder ein flüssiges Dielektrikum, insbesondere Wasser, für den gestapelten Bandleiterkondensator verwendet ist;

Fig. 11 eine zweite Variante zu Fig. 9 in entsprechender Darstellung zu Fig. 5 mit auseinandergezogenen Kondensatorbelägen, mit in einem Durchbruch angeordnetem Hochspannungsschalter und mit einem flüssigen Dielektrikum, insbesondere Wasser, und schliesslich

Fig. 12 eine Variante zu Fig. 11 mit festem Isolierstoff als Dielektrikum anstelle von Wasser.

Zahlreiche Einsatzmöglichkeiten im technisch, industriellen Bereich zeichnen sich für transversal angeregte (TE)-Laser (z.B. Excimer-TE-$CO_2$-Laser) ab, so dass Fragen wie Zuverlässigkeit und Standzeit der Systeme immer stärker in den Vordergrund treten.

Im Prinzip besteht ein TE-Lasersystem neben elektrischen Versorgungs- und Steuereinrichtungen, Gaskreisläufen für das Lasermedium und Kühlkreisläufen aus dem Laserkopf, dem pulsformenden Netzwerk (PFN) als Energiespeicher und einem schnellen elektrischen Hochleistungsschaltelement (z.B. Funkenstrecke, Thyratron oder Plasma-Schalter).

Der Betrieb eines Hochleistungs-TE-Lasers stellt extrem hohe Anforderungen an das Schaltelement, die möglichst zu reduzieren sind, um einen zuverlässigen Betrieb bei hoher Standzeit zu gewährleisten.

Als besonders günstige Variante für das PFN des Anregungskreises für TE-Laser hat sich der Blümlein-Schaltkreis (Fig. 1) herausgestellt. Das Lasersystem ist aus dem Schalter FK (Fig. 1), der Laserkammer LK (Fig. 1), der Impedanz $R_K$ (Fig. 1) sowie dem PFN aufgebaut, bestehend aus den Kondensatoren $C_F$, $C_K$ (Fig. 1) sowie den Induktivitäten $L_F$, $L_K$ (Fig. 1), die sich aus der Eigeninduktivität der Schalter, der Laserkammer, der Zuleitungen und der Kondensatoren ergeben. Die Beläge von $C_F$ sind mit 1, 2; von $C_K$ mit 3, 4, und der Hochspannungsanschluss ist mit HV bezeichnet.

Um eine effektive Anregung des in der Laserkammer LK befindlichen Lasergases zu erreichen, darf eine experimentell zu ermittelnde maximale Anstiegszeit $t_r$ der Spannung über den Elektroden in der Laserkammer nicht überschritten werden. Die Anstiegszeit ist proportional zu $\sqrt{L_F \cdot C_F}$, wobei gelten muss $t_r > \pi \sqrt{L_F \cdot C_F}$. Bei vorgegebenen $C_F$ liegt durch diese Beziehung $L_F$ fest und somit beträgt der maximale Strom durch das Schaltelement

$$U_o \cdot \sqrt{\frac{C_F}{L_F}}$$

($U_o$ = Ladespannung der Kondensatoren). Durch Reduktion der Kapazität $C_F$ auf $k \cdot C_K$ ($0{,}5 \leq k \leq 1$) bei konstant gehaltener Anstiegszeit $t_r$, d.h. Erhöhung von $L_F$ auf $L_F/k$, wird der Spitzenstrom am Schaltelement auf

$$U_o \cdot k \sqrt{\frac{C_K}{L_K}}$$

verringert.

Gegenüber der symmetrischen Blümlein-Schaltung ($C_F = C_K$) wird im Anregungskreis für den Laser, der durch Hintereinanderschaltung der Kondensatoren $C_F$ und $C_K$ gebildet wird – wobei in dem Kreis der Induktivität $L_K$ und der ohmsche Widerstand der Laserentladungsstrecke liegt – in der unsymmetrischen Blümlein-Schaltung ($C_F = k \cdot C_K$) für einen Wertebereich von $0{,}5 \leq k \leq 1$ der charakteristische Widerstand in schwachem, zu tolerierendem Umfang heraufgesetzt. Werte $k < 0{,}5$ sind auch möglich, führen aber zu einer grösseren Heraufsetzung des charakteristischen Widerstandes gemäss der Beziehung

$$Z_K = \sqrt{\frac{L_K}{C_K}} \cdot \sqrt{\frac{1+K}{K}} \cdot$$

Die unsymmetrische Blümlein-Schaltung reduziert somit beträchtlich die Anforderungen, die an das Schaltelement zu stellen sind, wobei die Eigenschaften des eigentlichen Laseranregungskreises nur unwesentlich beeinflusst werden.

Die vorliegende Erfindung beschreibt die Nutzung dieser Erkenntnisse für das aus der DE-A-2 932 781 bekannte Anregungssystem für eine schnelle gepulste Entladung.

Anhand der Fig. 2, die der Fig. 2 der obigen Patentanmeldung enspricht, werden mögliche Abänderungen des pulsformenden Netzwerkes beschrieben, die jedoch die prinzipiellen Vorteile des PFN bewahren. Hiermit ist die Funkenstrecke FK mit ihren Elektroden $E_{F1}$ und $E_{F2}$ und die Laserkammer LK mit ihren Elektroden $E_{L1}$ und $E_{L2}$ dargestellt.

Die Isolierschichtdicke des Kondensators $C_F$ – gebildet durch die Beläge 1, 2 – wird gegenüber der des Kondensators $C_K$ vergrössert oder die Fläche wird verkleinert oder es wird ein Dielektrikum d mit einer geringeren Dielektrizätskonstanten gegenüber der des Kondensators $C_K$ verwandt. Ebenso ist eine Kombination aller bzw. von zwei dieser Massnahmen möglich.

Durch Verwendung von Wasser als Dielektrikum d' bzw. einem flüssigen Dielektrikum (Fig. 3 entsprechend Fig. 11 von DE-A-2 932 781) lässt sich die beabsichtigte Schaltungsvariation durch eine Verkleinerung der Fläche der Platte 1/1 gegenüber der der Flächen der Platten 2/3 und 4/4 oder durch eine Erhöhung des Abstandes der Platte 1/1 von der Platte 2/3 gegenüber dem der Platten 2/3 und 4/4 erreichen. Es ist auch eine Kombination beider Massnahmen möglich. Diese Anordnung ist selbstverständlich nicht auf flüssiges Dielektrikum beschränkt, sondern kann auch mit einem festen oder pastenförmigen Dielektrikum arbeiten.

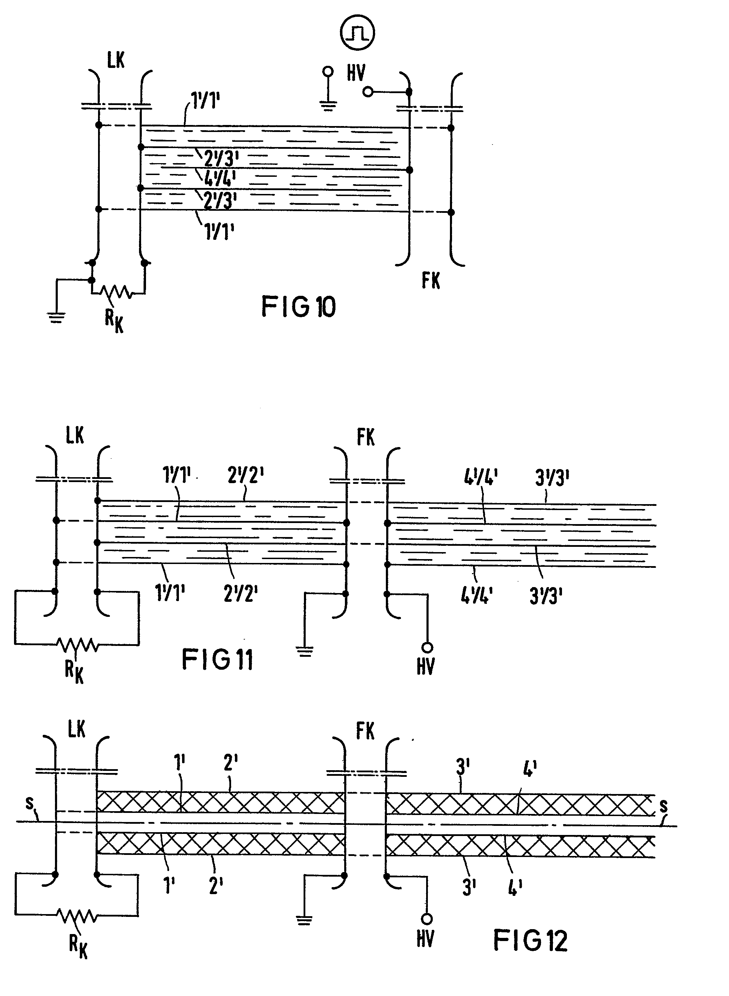

Entsprechend den Angaben über ein festes Dielektrikum kann bei der Anordnung verfahren werden, die in Fig. 4 beschrieben ist (entspricht Fig. 9 von DE-A-2 932 781).

Auch in diesem Fall ist eine sinngemässe Übertragung vorzunehmen, wenn flüssiges Dielektrikum – insbesondere Wasser – verwandt wird. Diesen Aufbau zeigt Fig. 5. Dadurch wird eine platzsparende Anordnung hoher Energiedichte erreicht. Diese «gestreckte» Anordnung kann auch in Charge-Transfer-Schaltung betrieben werden, und es ist auch der Fall gleicher Flächen und gleicher Abstände der Platten einzuschliessen. Die Charge-Transfer-Variante zeigt Fig. 11.

Eine weitere Möglichkeit, die Vorteile der beschriebenen Schaltung zu erreichen, zeigt die Fig. 6. Zwischen den Kondensatorbelägen 1 und 2 sowie 3 und 4 tritt die Potentialdifferenz HV auf, im Schaltfall beträgt die Spannung zwischen den Belägen 4 und 1 maximal $2 \times$ HV. Es muss deshalb zwischen diesen beiden Belägen mindestens der doppelte Isolationsabstand $d_{1,4}$ im Vergleich zu $d_{1,2}$ gewählt werden. Die Fläche des durch die Beläge 1, 2 jeweils gebildeten Kondensators $C_F$ muss kleiner gleich der durch die Beläge 3, 4 gebildeten $C_K$ sein, die Isolierschichtdicke grösser oder gleich oder die Dielektrizitätskonstante kleiner oder gleich sein, wobei auch eine Kombination aller oder zwei dieser Massnahmen denkbar ist.

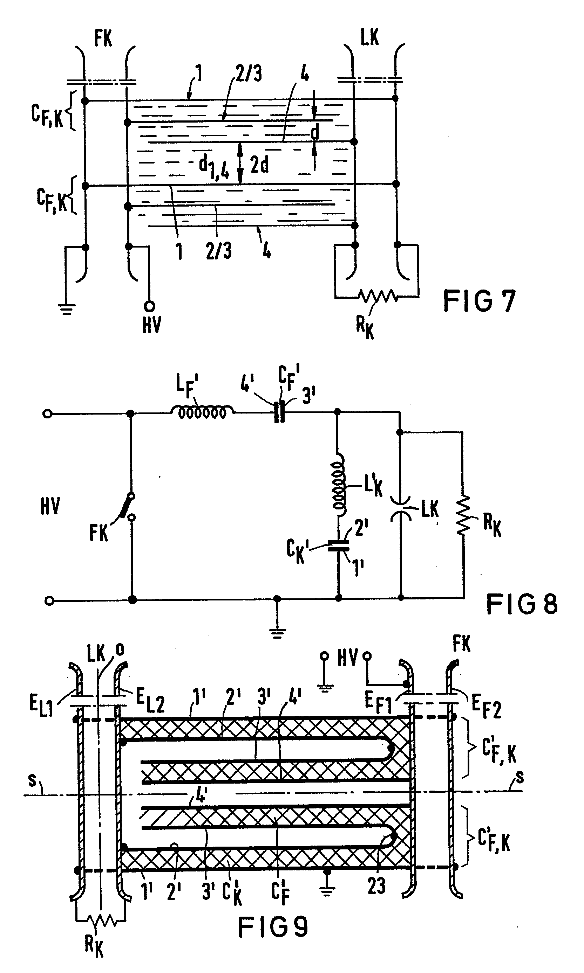

Durch den Einsatz von einem flüssigen Dielektrikum – insbesondere Wasser – ergibt sich der Fall, den Fig. 7 beschreibt. Der Isolationsabstand zwischen Belägen 1 und 2/3 sowie zwischen 2/3 und 4 ist mit d, der zwischen den einander zugewandten Belägen 1 und 4 der benachbarten Kapazitätseinheiten CF, K mit $d_{1,4}$ bezeichnet. Wegen maximal $2 \times$ HV sollte $d_{1,4} \geq$ 2d sein.

Wird die Fläche der Platte 1 jeweils kleiner gleich der Fläche der Platten 2 und 3 bei CE1, CE2 . . . usw. vorgesehen oder der Abstand der Flächen 1 und 2 jeweils kleiner gleich als der Abstand der Flächen 2 und 3 bei CE1, CE2 . . . usw. eingerichtet oder eine Kombination beider Massnahmen gewählt, so lässt sich der beabsichtigte Schaltungseffekt erzielen.

Für die Anregung von z.B. $CO_2$-Lasern hat sich als günstig der Charge-Transfer-Kreis herausgestellt, wie er in Fig. 8 dargestellt ist. Durch die Hochspannungsquelle HV wird der Kondensator $C_F'$ auf die Spannung $U_o$ aufgeladen. Durch Schliessen des Schalters FK, z.B. Thyratron, wird der zunächst ungeladene, auf Erdpotential liegende Kondensator $C_K'$ auf bis die doppelte Ladespannung aufgeladen entsprechend dem Verhältnis der Kapazitäten $C_F'$ und $C_K'$ und der Durchbruchspannung, d.h. Zündspannung der Laserkammer LK.

Erfindungsgemäss wird bei der Charge-Transfer-Schaltung $C_K' < C_F'$ bzw. $C_K' \ll C_F'$ gewählt. Es werden in dieser Anmeldung Möglichkeiten beschrieben, diese Schaltung zu realisieren bei gleichzeitiger Beibehaltung der Vorteile des PFN, die in der DE-A-2 932 781 erläutert wurden.

Ein mögliches Ausführungsbeispiel zeigt Fig. 9, die Fig. 5 der DE-A-2 932 781 entspricht.

Die Fläche der Beläge 1', 2' wird kleiner gleich der Fläche der Beläge 3', 4' gewählt bzw. die Dicke des Dielektrikums des Kondensators $C_K'$ wird grösser der des Kondensators $C_F'$ gewählt oder die Dielektrizitätskonstante des Dielektrikums des Kondensators $C_K'$ wird kleiner der des Kondensators $C_F'$ gewählt. Es ist auch eine Kombination aller oder von zwei dieser Merkmalen möglich.

In Fig. 10 wird die Modifikation des PFN mit flüssigem Dielektrikum – insbesondere Wasser – für den Charge-Transfer-Kreis erläutert. Beläge, die auf in der Darstellung der Fig. 9 gleichem Potential liegen, sind, wie aus Fig. 10 ersichtlich, zu einer Platte zusammengefasst. In dieser Anordnung wird die Fläche der Platte 1'/1' kleiner den Flächen der Platten 2'/3' und der Platte 4'/4' ausgeführt oder der Abstand zwischen den Platten 1'/1' und 2'/3' grösser dem Abstand zwischen den Platten 2'/3' und der Platte 4'/4' gewählt. Es ist auch eine Kombination beider Ausführungen möglich.

Eine weitere Möglichkeit das PFN aufzubauen, beschreibt Fig. 11, dabei handelt es sich wieder um eine «gestreckte» Anordnung.

Wird die Fläche 1'/1' kleiner den Flächen der Platten 3'/3' und 4'/4' gewählt oder der Abstand zwischen den Platten 1'/1' und 2'/2' grösser dem Abstand zwischen den Platten 4'/4' und 3'/3' angenommen oder eine Kombination beider Massnahmen der Vorzug gegeben, so lässt sich der gewünschte Effekt erzielen.

Bei Einsatz von Festkörperkondensatoren ist die Schaltung gemäss Fig. 12 aufzubauen. Bei dieser Anordnung ist die Fläche der Beläge 1' und 2' kleiner den Belägen 3' und 4' zu wählen oder der Abstand des Dielektrikums zwischen den Belägen 1' und 2' grösser den Abständen zwischen 3' und 4' aufzubauen oder die Dielektrizitätskonstante zwischen 1' und 2' kleiner der zwischen 3' und 4' zu wählen. Es ist auch eine Kombination aller dieser Varianten möglich.

Entsprechend den Grenzen der Strombelastbarkeiten eines einzelnen Schaltelementes ist bei allen Schaltungsvarianten einem oder mehreren Kondensatorteilstapeln – wie sie in der DE-A-2 932 781 definiert wurden – jeweils ein Schaltelement zuzuordnen.

**Patentansprüche**

1. Anordnung zur Anpassung von pulsformenden Netzwerken an die Erfordernisse des Anregungskreises eines TE-Hochenergielasersystems, das mit Anregung durch möglichst homogene lichtbogenfreie Kondensatorentladung im Gasraum einer Laserkammer zwischen mindestens zwei mit Abstand einander gegenüberliegenden Laser-Elektroden arbeitet; dabei besteht das Hochenergielasersystem aus

– einem Laserkopf mit den erwähnten Laser-Elektroden ($E_{L1}$, $E_{L2}$) innerhalb der Laserkammer (LK), welche jeweils parallel zur optischen Achse des Laserkopfes sich erstrecken und bevorzugt einen in dieser Richtung ausgedehnten Vollquerschnitt aufweisen;

– mindestens einem schnellen Hochspannungsschalter (FK), durch dessen Aktivierung bzw. Zündung über das pulsformende Netzwerk Hochspannungsimpulse an den Laser-Elektroden erzeugbar sind;

– und aus dem genannten pulsformenden Netzwerk mit dem Hochspannungsschalter und dem Laserkopf zugeordneten ersten und zweiten Bandleiterkondensatoren ($C_F$, $C_K$) und mit zugehörigen Ersatzinduktivitäten des Anregungskreises ($L_F$, $L_K$), die sich insbesondere aus der Eigeninduktivität des Hochspannungsschalters, des Laserkopfes, der Zuleitungen und der Bandleiterkondensatoren ergeben;

dadurch gekennzeichnet, dass bei einem pulsformenden Netzwerk in Blümlein-Schaltung und bei gegebener maximaler Anstiegszeit ($t_R$) der an den Laser-Elektroden erzeugten Hochspannungsimpulse die Kapazität des ersten Bandleiterkondensators ($C_F$) im Vergleich zur Kapazität des zweiten Bandleiterkondensators ($C_K$) um den Faktor k < 1 erniedrigt und die Induktivität der mit dem Kondensator ($C_F$) in Serie liegenden Ersatzinduktivitäten ($L_F$) dementsprechend etwa um den Faktor $\frac{1}{k}$ vergrössert ist.

2. Anordnung nach Anspruch 1, dadurch gekennzeichnet, dass die Bandleiterkondensatoren ($C_F$, $C_K$) mit ihren Belägen und ihren dazwischenliegenden dielektrischen Schichten im wesentlichen normal zur optischen Achse des Laserkopfes verlaufen und im wesentlichen parallel zur optischen Achse des Laserkopfes zu einem Kondensatorpaket gestapelt sind und direkt oder mit seitlich herausgeführten Anschlussfahnen innerhalb des pulsformenden Netzwerkes angeschlossen sind.

3. Anordnung nach Anspruch 1 oder 2, dadurch gekennzeichnet, dass der Wert k in den Grenzen

$$0{,}5 \leq k < 1$$

liegt.

4. Anordnung nach einem der Ansprüche 1 bis 3, dadurch gekennzeichnet, dass die Stärke der dielektrischen Schicht zwischen den Platten (1, 2) des ersten Bandleiterkondensators ($C_F$) im Vergleich zu derjenigen des zweiten Bandleiterkondensators ($C_K$) vergrössert ist.

5. Anordnung nach einem der Ansprüche 1 bis 4, dadurch gekennzeichnet, dass die Fläche der Platten (1, 2) des ersten Bandleiterkondensators ($C_F$) im Vergleich zur Plattenfläche des zweiten Bandleiterkondensators ($C_K$) verringert ist.

6. Anordnung nach einem der Ansprüche 1 bis 5, dadurch gekennzeichnet, dass die Dielektrizitätskonstante der zwischen den Platten (1, 2) des ersten Bandleiterkondensators ($C_F$) befindlichen Isolierschicht kleiner als die Dielektrizitätskonstante ($\varepsilon_K$) beim zweiten Bandleiterkondensator ($C_K$) ist.

7. Anordnung zur Anpassung von pulsformenden Netzwerken an die Erfordernisse des Anregungskreises eines TE-Hochenergielasersystems, das mit Anregung durch möglichst homogene lichtbogenfreie Kondensatorentladung im Gasraum einer Laserkammer zwischen mindestens zwei mit Abstand einander gegenüberliegenden Laser-Elektroden arbeitet; dabei besteht das Hochenergielasersystem aus

– einem Laserkopf mit den erwähnten Laser-Elektroden ($E_{L1}$, $E_{L2}$) innerhalb der Laserkammer (LK), welche jeweils parallel zur optischen Achse des Laserkopfes sich erstrecken und bevorzugt einen in dieser Richtung ausgedehnten Vollquerschnitt aufweisen;

– mindestens einem schnellen Hochspannungsschalter (FK), durch dessen Aktivierung bzw. Zündung über das pulsformende Netzwerk die Hochspannungsimpulse an den Laser-Elektroden erzeugbar sind,

– und aus dem genannten pulsformenden Netzwerk mit dem Hochspannungsschalter und dem Laserkopf zugeordneten ersten und zweiten Bandleiterkondensatoren ($C_F'$, $C_K'$) und mit zugehörigen Ersatzinduktivitäten des Anregungskreises ($L_F'$, $L_K'$), die sich insbesondere aus der Eigeninduktivität des Hochspannungsschalters, des Laserkopfes, der Zuleitungen und der Bandleiterkondensatoren ergeben,

dadurch gekennzeichnet, dass bei einem pulsformenden Netzwerk in Charge-Transfer-Schaltung mit Bandleiterkondensatoren, welche mit ihren Belägen und ihren dazwischenliegenden dielektrischen Schichten im wesentlichen normal zur optischen Achse des Laserkopfes verlaufen und im wesentlichen parallel zur optischen Achse des Laserkopfes zu einem Kondensatorpaket gestapelt sind sowie direkt oder mit seitlich herausgeführten Anschlussfahnen innerhalb des pulsformenden Netzwerkes angeschlossen sind, bei dem ersten, dem Laserkopf (LK) zugeordneten Bandleiterkondensator ($C_K'$) und bei dem zweiten, dem Hochspannungsschalter (FK) zugeordneten Bandleiterkondensator ($C_F'$), deren Belagflächen, Schichtdicken des Dielektrikums und Dielektrizitätskonstanten mit $F_F$, $d_K$ und $\varepsilon_K$ bzw. mit $F_F$, $d_F$ und $\varepsilon_F$ bezeichnet sind, mindestens eine der folgenden Bemessungen getroffen ist:

a) $F_K < F_F$;
b) $d_K > d_F$;
c) $\varepsilon_K < \varepsilon_F$,

so dass

$$\varepsilon_K \cdot \frac{F_K}{d_K} \;<\; \varepsilon_F \cdot \frac{F_F}{d_F}\;.$$

8. Anordnung nach Anspruch 2 oder 7, dadurch gekennzeichnet, dass jeweils zwei in Stapelrichtung einander benachbarte Kapazitätseinheiten ($C_{F,K}$ bzw. $C_{F',K}$) im wesentlichen spiegelsymmetrisch in bezug auf eine quer zur Kondensator-Stapelrichtung verlaufende Symmetrieebene angeordnet sind.

9. Anordnung nach Anspruch 2 oder 7, dadurch gekennzeichnet, dass die in Stapelrichtung einander benachbarten Kapazitätseinheiten ($C_{F,K}$ bzw. $C_F'$, $_K$) gleichsinnig, d.h. mit gleichartiger Orientierung ihrer Beläge, aufeinander folgen.

10. Anordnung nach Anspruch 8 oder 9, dadurch gekennzeichnet, dass das aus den einzelnen Kapazitätseinheiten bestehende Kondensatorpaket ein aus einer dielektrischen Flüssigkeit, insbesondere aus chemisch reinem Wasser, bestehendes oder pastenartiges Dielektrikum aufweist.

11. Anordnung nach Anspruch 8 oder 9, dadurch gekennzeichnet, dass das Kondensatorpaket ein aus einem festen Isolierstoff bestehendes Dielektrikum aufweist.

12. Anordnung nach Anspruch 2 oder einem der Ansprüche 8 bis 11, soweit sie sich auf Anspruch 2 rückbeziehen, mit gestreckter ungefalteter Anordnung des den beiden Bandleiterkondensatoren ($C_F$, $C_K$) einer Kapazitätseinheit ($C_{F,K}$) gemeinsamen Kondensatorbelages (2, 3), dadurch gekennzeichnet, dass das Kondensatorpaket mit einem in Stapelrichtung weisenden, etwa mittigen Durchbruch für den Laserkopf (LK) versehen ist und letzterer hochspannungsisoliert innerhalb dieses Durchbruchs, der Hochspannungsschalter (FK) dagegen am Aussenumfang des Kondensatorpaketes angeordnet ist.

13. Anordnung nach Anspruch 7 oder einem der Ansprüche 8 bis 11, soweit sie sich auf Anspruch 7 rückbeziehen, mit gestreckter ungefalteter Anordnung des den beiden Bandleiterkondensatoren $C_F'$, $C_K'$) einer Kapazitätseinheit ($C_{F',K}$) gemeinsamen Kondensatorbelages (2', 3'), dadurch gekennzeichnet, dass das Kondensatorpaket mit einem in Stapelrichtung weisenden, etwa mittigen Durchbruch für eine in einem Rohr untergebrachte schnelle Hochspannungsschaltstrecke (FK) versehen ist und letztere hochspannungsisoliert innerhalb dieses Durchbruchs, der Laserkopf (LK) dagegen am Aussenumfang des Kondensatorpaketes angeordnet ist.

14. Anordnung nach Anspruch 8, für kompakte Bauweise, insbesondere für Wasser als Dielektrikum aufweisende Kondensatorpakete, dadurch gekennzeichnet, dass die in Stapelrichtung einander benachbarten, potential-gleichen Beläge 1, 4 bzw. 1', 4' und/oder 2, 3 bzw. 2', 3') der Kapazitätseinheiten ($C_{F,K}$ bzw. $C_F'$, $_K$) zu gemeinsamen Belägen (1/1, 4/4 und/oder 2/3 bzw. 1'/1', 4'/4' und/oder 2'/3') baulich miteinander vereinigt sind.

**Claims**

1. Arrangement for adapting pulse-shaping networks to the requirements of the exciter circuit of a TE high-energy laser system, which operates with as homogeneous as possible, arc-free capacitor discharge in the gas space of a laser chamber between at least two laser electrodes lying in opposite spaced arrangement; here the high-energy laser system consists of
– a laser head with the said laser electrodes ($E_{L1}$, $E_{L2}$) inside the laser chamber (LK), which extend in each case parallel to the optical axis of the laser head and preferably have a solid section elongated in this direction;
– at least one rapid high-voltage switch (FK), by whose activation or ignition high-voltage impulses can be produced at the laser electrodes via the pulse-shaping network;
– and of said pulse-shaping network with first and second strip conductor capacitors ($C_F$, $C_K$) associated with the high-voltage switch and the laser head, and with associated substitute inductances of the exciter circuit ($L_F$, $L_K$), which are produced particularly from the self-inductance of the high-voltage switch, the laser head, the supply lines and the strip conductor capacitors; characterised in that in the case of a pulse-shaping network in Blümlein circuitry and for a given maximum rise time ($t_R$) of the high-voltage impulses produced at the laser electrodes, the capacitance of the first strip conductor capacitor ($C_F$) is reduced by the factor $k < 1$ relative to the capacitance of the second strip conductor capacitor ($C_K$), and the inductance of the substitute inductances ($L_F$) lying in series with the capacitor ($C_F$) is increased accordingly roughly by the factor $\frac{1}{k}$.

2. Arrangement according to claim 1, characterised in that the strip conductor capacitors ($C_F$, $C_K$), along with their coatings and dielectric layers lying between them, run essentially normally to the optical axis of the laser head and are stacked essentially parallel to the optical axis of the laser head to form a capacitor stack, and are connected directly or with laterally projecting connecting lugs inside the pulse-shaping network.

3. Arrangement according to claim 1 or 2, characterised in that the value k lies within the limits $0.5 \leq k \leq 1$.

4. Arrangement according to one of claims 1 to 3, characterised in that the thickness of the dielectric layer between the plates (1, 2) of the first strip conductor capacitor ($C_F$) is increased relative to that of the second strip conductor capacitor ($C_K$).

5. Arrangement according to one of claims 1 to 4, characterised in that the surface of the plates (1, 2) of the first strip conductor capacitor ($C_F$) is reduced relative to the plate surface of the second strip conductor capacitor ($C_K$).

6. Arrangement according to one of claims 1 to 5, characterised in that the dielectric of the insulating layer between the plates (1, 2) of the first strip conductor capacitor ($C_F$) is smaller than the dielectric constant ($\varepsilon_K$) in the case of the second strip conductor capacitor ($C_K$).

7. Arrangement for adapting pulse-shaping networks to the requirements of the exciter circuit of a TE high-energy laser system, which operates with excitement by as homogenous as possible arc-free capacitor discharge in the gas space of a laser chamber between at least two laser electrodes lying in opposite spaced arrangement; the high-energy laser system consists in this case of
– a laser head with the said laser electrodes ($E_{L1}$, $E_{L2}$) inside the laser chamber (LK), which extend in each case parallel to the optical axis of the laser head and preferably have a solid cross-section elongated in this direction;

– at least one rapid high-voltage switch (FK), by whose activation or ignition the high-voltage impulses can be produced at the laser electrodes via the pulse-shaping network,

– and the said pulse-shaping network with first and second strip conductor capacitors ($C_F'$ and $C_K'$) associated with the high-voltage switch and the laser head, and with associated substitute inductances of the exciter circuit ($L_F'$, $L_K'$), which are produced particularly from the self-inductance of the high-voltage switch, the laser head, the supply lines and the strip conductor capacitors, characterised in that for a pulse-shaping network in charge-transfer circuitry with strip conductor capacitors, which, along with their coatings and dielectric layers lying between them, run essentially normally to the optical axis of the laser head and are stacked essentially parallel to the optical axis of the laser head to form a capacitor stack, and are connected directly or with laterally projecting connecting lugs inside the pulse-shaping network, at least one of the following dimensions is appropriate in the case of the first strip conductor capacitor ($C_K'$) associated with the laser head (LK) and in the case of the second strip conductor capacitor ($C_F'$) associated with the high-voltage switch (FK), whose coating surfaces, layer thicknesses of the dielectric and dielectric constants are indicated by $F_K$, $d_K$ and $\varepsilon_K$, or by $F_F$, $d_F$ and $\varepsilon_F$:

a) $F_K \leq F_F$;
b) $d_K \geq d_F$;
c) $\varepsilon_K \leq \varepsilon_K$;

so that

$$\varepsilon_K \cdot \frac{F_K}{d_K} \; < \; \varepsilon_F \cdot \frac{F_F}{d_F} \; .$$

8. Arrangement according to claim 2 or 7, characterised in that two respective capacitance units ($C_{F, K}$ and $C_F'$, $_K$), adjacent to each other in the stacking direction, are in essentially mirror-symmetrical arrangement relative to a plane of symmetry transverse to the capacitor stack direction.

9. Arrangement according to claim 2 or 7, characterised in that the capacitance units ($C_{F, K}$ and $C_F'$, $_K$) adjacent to each other in the stacking direction succeed each other unidirectionally, i.e. with the same orientation of their coatings.

10. Arrangement according to claim 8 or 9, characterised in that the capacitor stack consisting of the individual capacitance units has a paste-like dielectric or one consisting of a dielectric fluid, particularly of chemically pure water.

11. Arrangement according to claim 8 or 9, characterised in that the capacitor stack has a dielectric consisting of a solid insulating material.

12. Arrangement according to claim 2 or one of claims 8 to 11, insofar as they refer back to claim 2, with an elongated unfolded arrangement of the capacitor coating (2, 3) common to the two strip conductor capacitors ($C_F$, $C_K$) of a capacitance unit ($C_{F, K}$), characterised in that the capacitor stack is provided with a roughly central opening pointing in the stack direction for the laser head (LK) and the latter is arranged inside this opening in such a manner as to be insulated against high-voltage, but the high-voltage switch (FK), on the other hand, is arranged on the external periphery of the capacitor stack.

13. Arrangement according to claim 7 or one of claims 8 to 11, insofar as they refer back to claim 7, with an elongated unfolded arrangement of the capacitor coating (2', 3') common to the two strip conductor capacitors ($C_F'$, $C_K'$) of a capacitance unit ($C_F'$, $_K$), characterised in that the capacitor stack is provided with a roughly central opening pointing in the stack direction for a rapid high-voltage switching section (FK) accommodated in a tube, and the latter is arranged inside this opening in such a manner as to be insulated against high-voltage, but the laser head (LK), on the other hand, is arranged on the external periphery of the capacitor stack.

14. Arrangement according to claim 8, for compact designs, particularly for capacitor stacks having water as a dielectric, characterised in that the potentially-identical coatings (1, 4 or 1', 4' and/or 2, 3 or 2', 3') of the capacitance units ($C_{F,K}$ or $C_F'$, $_K$) adjacent to each other in the stacking direction are structurally united with each other to form common coatings (1/1, 4/4 and/or 2/3 or 1/1, 4/4' and/or 2/3').

## Revendications

1. Dispositif pour adapter des réseaux de mise en forme d'impulsions aux exigences du circuit d'excitation d'un système laser à haute énergie du type TE, qui fonctionne avec une excitation produite par une décharge aussi homogène que possible et sans arc, d'un condensateur, dans l'espace à gaz d'une chambre du laser, entre au moins deux électrodes de production de l'effet laser, qui sont disposées en vis-à-vis et à distance l'une de l'autre, le système laser à haute énergie étant constitué par

– une tête laser comportant les électrodes mentionnées de production de l'effet laser ($E_{L1}$, $E_{L2}$) situées à l'intérieur de la chambre (LK) du laser et qui s'étendent respectivement parallèlement à l'axe optique de la tête laser et possèdent de préférence une section transversale totale étendue dans cette direction;

– au moins un interrupteur rapide à haute tension (FK), au moyen de l'activation ou de l'amorçage duquel des impulsions à haute tension peuvent être produites sur les électrodes produisant l'effet laser, par l'intermédiaire du réseau de mise en forme d'impulsions;

– ledit réseau de mise en forme d'impulsions comportant un premier et un second condensateurs en forme de conducteurs plats ($C_F$, $C_K$), associés à l'interrupteur à haute tension et à la tête laser, et des inductances équivalentes associées du circuit d'excitation ($L_F$, $L_K$), qui sont formées notamment par l'inductance propre de l'interrupteur à haute tension, de la tête laser, des conducteurs d'alimentation et des condensateurs en forme de conducteurs plats caractérisé en ce que dans le cas d'un réseau de mise en forme d'impulsions réalisé sous la forme d'un circuit de Blümlein et pour un temps de montée maximum ($t_R$) donné des impulsions de haute tension produites au niveau des électrodes produisant l'effet laser, la capacité d'un premier condensateur en forme de conducteur plat ($C_F$) est réduite du facteur $k < 1$, par rapport à la capacité du second condensateur ($C_K$) en forme de conducteur plat, et la valeur des inductances équivalentes ($L_F$), qui sont branchées en série avec le condensateur ($C_F$), est accrue de façon correspondante approximativement du facteur $\dfrac{1}{k}$.

2. Dispositif suivant la revendication 1, caractérisé par le fait que les armatures et les couches diélectriques, intercalées entre ces armatures, des condensateurs ($C_F$, $C_K$) en forme de conducteurs plats, sont sensiblement perpendiculaires à l'axe optique de la tête laser et sont empilées sensiblement parallèlement à l'axe optique de la tête laser de manière à former un paquet de condensateurs et sont raccordées directement ou au moyen de languettes de raccordement ressorties latéralement, à l'intérieur du réseau de mise en forme d'impulsions.

3. Dispositif suivant la revendication 1 ou 2, caractérisé par le fait que la valeur k se situe dans les limites

$$0,5 \leq k \leq 1$$

4. Dispositif suivant l'une des revendications 1 à 3, caractérisé par le fait que l'épaisseur de la couche diélectrique entre les plaques (1, 2) du premier condensateur ($C_F$) en forme de conducteur plat est accrue par rapport à l'épaisseur du second condensateur ($C_K$) en forme de conducteur plat.

5. Dispositif suivant l'une des revendications 1 à 4, caractérisé par le fait que la surface des plaques (1, 2) du premier condensateur ($C_F$) en forme de conducteur plat est réduite par rapport à la surface des plaques du second condensateur ($C_K$) en forme de conducteur plat.

6. Dispositif suivant l'une des revendications 1 à 5, caractérisé par le fait que la constante diélectrique de la couche isolante située entre les plaques (1, 2) du premier condensateur ($C_F$) en forme de conducteur plat est inférieure à la constante diélectrique ($\varepsilon_K$) pour le second condensateur ($C_K$) en forme de conducteur plat.

7. Dispositif pour adapter des réseaux de mise en forme d'impulsions aux exigences du circuit d'excitation d'un système laser à haute énergie du type TE, qui fonctionne avec une excitation produite par une décharge d'un condensateur, aussi homogène que possible et sans arc, dans l'espace à gaz d'une chambre du laser entre au moins deux électrodes produisant l'effet disposées en vis-à-vis à distance l'une de l'autre, le système laser à haute énergie étant constitué par

– une tête laser comportant les électrodes mentionnées produisant l'effet laser ($E_{L1}$, $E_{L2}$), situées à l'intérieur de la chambre ($L_K$) du laser et qui s'étendent respectivement parallèlement à l'axe optique de la tête laser et possèdent de préférence une section transversale totale étendue dans cette direction;

– au moins un interrupteur rapide à haute tension ($F_K$), au moyen de l'activation ou de l'amorçage duquel des impulsions à haute tension peuvent être produites sur les électrodes produisant l'effet laser, par l'intermédiaire du réseau de mise en forme d'impulsions;

– ledit réseau de mise en forme d'impulsions comportant un premier et un second condensateurs en forme de conducteurs plats ($C_F'$, $C_K'$) associés à l'interrupteur à haute tension et à la tête laser, et des inductances équivalentes associées au circuit d'excitation ($L_F'$, $L_K'$) qui sont formées notamment par l'inductance propre de l'interrupteur à haute tension, de la tête laser, des conducteurs d'alimentation et des condensateurs en forme de conducteurs plats, caractérisé en ce que dans le cas d'un réseau de mise en forme d'impulsions réalisé sous la forme d'un circuit à transfert de charge comportant des condensateurs en forme de conducteurs plats dont les armatures et les couches diélectriques, intercalées entre ces armatures sont sensiblement perpendiculaires à l'axe optique de la tête laser et sont empilées sensiblement parallèlement à l'axe optique de la tête laser pour former un paquet de condensateurs et sont raccordées directement aux moyens de languettes de raccordement ressorties latéralement, à l'intérieur du réseau de mise en forme d'impulsions, pour le premier condensateur ($C_K'$) en forme de conducteur plat associé à la tête laser (LK) et pour le second condensateur ($C_F'$) en forme de conducteur plat associé à l'interrupteur à haute tension (FK), on a, avec les surfaces d'armature, les épaisseurs de la couche du diélectrique et les constantes diélectriques désignées par ($F_K$, $d_K$, $\varepsilon_K$ et $F_F$, $d_F$ et $\varepsilon_F$) au moins l'un des dimensionnement suivants:

    a) $F_K < F_F$;
    b) $d_K > d_F$;
    c) $\varepsilon_K < \varepsilon_F$,
de sorte que:

$$\varepsilon_K \cdot \frac{F_K}{d_K} \; < \; \varepsilon_F \cdot \frac{F_F}{d_F} \quad .$$

8. Dispositif suivant la revendication 2 ou 7, caractérisé en ce que respectivement deux unités capacitives ($C_F$, K ou $C_F'$, K), qui sont directement voisines dans la direction d'empilage, sont disposées essentiellement symétriquement par rapport à un plan de symétrie transversal par rapport à la direction d'empilage du condensateur.

9. Dispositif suivant la revendication 2 ou 7, caractérisé par le fait que les unités capacitives ($C_F$, K ou $C_F'$ K) qui sont directement voisines suivant la direction d'empilage se succèdent dans le même sens, c'est-à-dire avec une orientation identique de leurs armatures.

10. Dispositif suivant la revendication 8 ou 9, caractérisé par le fait que le paquet de condensateurs constitué par les différentes unités capacitives comporte un diélectrique constitué par un liquide diélectrique, notamment de l'eau chimiquement pure, ou par une pâte.

11. Dispositif suivant la revendication 8 ou 9, caractérisé par le fait que le paquet de condensateurs comporte un diélectrique constitué en un matériau isolant solide.

12. Dispositif suivant la revendication 2 ou l'une des revendications 8 à 11, dans la mesure où elles sont rapportées à la revendication 2, dans lequel l'armature de condensateur (2, 3), qui est commune aux deux condensateurs ($C_F$, $C_K$) en forme de conducteurs plats d'une unité capacitive ($C_F$, K) sont disposées en étant étendues et non pliées, caractérisé par le fait que le paquet de condensateurs est muni d'un perçage approximativement central, dirigé suivant la direction d'empilage, pour la tête laser (LK) et que cette dernière est isolée vis-à-vis de la haute tension à l'intérieur de ce perçage, tandis que l'interrupteur à haute tension (FK) est disposé sur le pourtour extérieur du paque de condensateurs.

13. Dispositif suivant la revendication 7 ou l'une des revendications 8 à 11, dans la mesure où elle est rapportée à la revendication 7, dans lequel l'armature du condensateur (2, 3), qui est commune aux deux condensateurs ($C_F'$, $C_K'$) en forme de conducteurs plats d'une unité capacitive ($C_F'$, K), sont disposées en étant étendues et non pliées, caractérisé par le fait que le paquet de condensateurs comporte un perçage approximativement centré s'étendant suivant la direction d'empilage, pour une section rapide de commutation à haute tension ($F_K$) logée dans un tube et que ce dernier est disposé, en étant isolé vis-à-vis de la haute tension, à l'intérieur de ce perçage, tandis que la tête laser (LK) est au contraire disposée sur le pourtour extérieur du paquet de condensateurs.

14. Dispositif suivant la revendication 8, pour un type de réalisation compacte, notamment pour des paquets de condensateurs contenant de l'eau en tant que diélectrique, caractérisé par le fait que les couches équipotentielles (1, 4 ou 1', 4' et/ou 2, 3 ou 2', 3') directement voisines les unes des autres suivant la direction d'empilage, des unités de capacité ($C_F$, K ou $C_F'$, K) sont réunies entre elles du point de vue construction pour former des armatures communes (1/1, 4/4, et/ou 2/3 ou 1'/1', 4'/4' et/ou 2'/3').

FIG 1

FIG 2

FIG 3

0 092 088

FIG 4

FIG 5

FIG 6

13

FIG 7

FIG 8

FIG 9

FIG 10

FIG 11

FIG 12